# EUROPÄISCHE PATENTSCHRIFT

(11) **EP 1 182 103 B1**
(45) Veröffentlichungstag und Bekanntmachung des Hinweises auf die Patenterteilung: **13.04.2005**
(21) Anmeldenummer: 01202994.8
(22) Anmeldetag: 08.08.2001
(51) Int. Cl.: B60R 25/02

(54) **Vorrichtung zur Verriegelung der Lenkspindel eines Kraftfahrzeuges**
Device for locking a vehicle steering column
Dispositif de verrouillage pour la colonne de direction d'un véhicule

(30) Priorität: 22.08.2000 DE 10041018
(43) Veröffentlichungstag der Anmeldung: 27.02.2002
(73) Patentinhaber: Valeo Sicherheitssysteme GmbH, 85253 Erdweg (DE)
(72) Erfinder: Frich, Alexander, 86153 Augsburg (DE); Engelmann, Joachim, 94100 Saint Maur des Fosses (FR); Rocheteau, Etienne, 85253 Grossberghofen (DE)
(74) Vertreter: Rosolen-Delarue, Katell

(56) Entgegenhaltungen:
- DE-A- 3 443 712
- DE-C- 3 611 483
- DE-C- 19 653 860

## Beschreibung

Die Erfindung betrifft eine Vorrichtung zur Verriegelung der Lenkspindel einer Lenkeinrichtung eines Kraftfahrzeuges gemäß dem Oberbegriff des Anspruchs 1, siehe DE 34 3712 A.

Eine weitere Vorrichtung ist beispielsweise aus der DE 196 53 860 C1 bekannt. Diese bekannte Vorrichtung umfaßt sowohl einen in Richtung seiner Längsachse von einer Ent- in eine Verriegelungsstellung und umgekehrt verschiebbaren Sperrbolzen als auch einen als Exzenter ausgebildeten und durch einen Elektromotor drehbar angeordneten Steuemocken, der bei seiner Drehung die Verschiebung des Sperrbolzens bewirkt. Hierzu stützt sich der Steuernocken auf seiner der Lenkspindel abgewandten Seite direkt an einer Anlagefläche eines relativ großen zentralen Ausschnittes des Sperrbolzens ab. Dabei wird bei der Verschiebung des Sperrbolzens von der Ver- in die Entriegelungsstellung eine zwischen Sperrbolzen und Gehäuse der Vorrichtung angeordnete Feder gespannt. Soll der Sperrbolzen wieder in seine Verriegelungsstellung verschoben werden, so wird der Steuernocken mittels des Elektromotors weitergedreht, wobei durch die vorgespannte Feder die Anlagefläche des Sperrbolzens ständig gegen den Steuernocken gepreßt wird.

Gelangt der Sperrbolzen nicht in seine Verriegelungsstellung, weil er auf den vorstehenden steg- oder zahnförmigen Bereich zwischen zwei Rastnuten eines an der Lenkspindel befestigten Schließringes trifft (ready-to-lock Position), so dreht sich zwar der Steuernocken weiter, bis er seine Endlage erreicht hat, der Sperrbolzen verbleibt aber zunächst in seiner Lage auf dem vorstehenden Bereich des Schließringes, und zwar so lange, bis durch Drehen der Lenkspindel der Sperrbolzen durch die vorgespannte Feder in eine der benachbarten Rastnuten gedrückt wird.

Abgesehen von dem relativ platzaufwendigen zentralen Ausschnitt des Sperrbolzens, weist diese bekannte Vorrichtung unter anderem den Nachteil auf, daß die für die Verschiebung des Sperrbolzens in seine Verriegelungsstellung verantwortliche Feder in der Entriegelungsstellung ständig vorgespannt ist und es daher nach einer gewissen Zeit zu einer Ermüdung der Feder kommen kann, was der Forderung der Fahrzeughersteller nach einer sicheren Verriegelung der Lenkspindel möglichst während der gesamten Lebensdauer des entsprechenden Fahrzeuges entgegensteht.

Der Erfindung liegt die Aufgabe zugrunde, eine Vorrichtung der eingangs erwähnten Art anzugeben, die einfach und platzsparend aufgebaut ist und bei der eine sichere Verschiebung des Sperrbolzens in seine Verriegelungsstellung auch noch nach einem längeren Zeitraum gewährleistet ist.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im wesentlichen auf dem Gedanken, zur Verschiebung des Sperrbolzens von der Ent- in die Verriegelungsstellung nicht eine vorgespannte, sich bei der Verschiebung des Sperrbolzens entspannende Feder heranzuziehen, sondern einen elastischen (federbeaufschlagten) Mitnehmer, der eine Anlagefläche aufweist, an der sich der Steuernocken auf seiner der Lenkspindel zugewandten Seite abstützt. Befindet sich der Sperrbolzen in seiner Entriegelungsstellung, liegt die Anlagefläche des Mitnehmers an dem Steuernocken an, ohne daß die Feder nennenswert gespannt zu sein braucht. Bei einer Drehung des Steuernockens wird dann der Mitnehmer und über die relativ steife Feder auch der Sperrbolzen axial verschoben. Es tritt in der Regel ebenfalls kein Spannen der Feder auf. Lediglich dann, wenn der Sperrbolzen nicht in seine Verriegelungsstellung gelangt, weil er z.B. auf den vorstehenden steg- oder zahnförmigen Bereich zwischen zwei Rastnuten des an der Lenkspindel befestigten Schließringes trifft, wird die Feder gespannt und verbleibt so lange in dieser vorgespannten Position, bis durch Verdrehen der Lenkspindel ein Verschieben des Sperrbolzens in die jeweils benachbarte Rastnut erfolgt.

Zur Verschiebung des Sperrbolzens in seine Entriegelungsstellung wird, wie bei der eingangs erwähnten bekannten Vorrichtung, die obere Anlagefläche des Sperrbolzens herangezogen. Allerdings entfällt eine Feder zwischen Sperrbolzen und Gehäuse. Auch ein Spannen der zwischen dem Sperrbolzen und dem Mitnehmer angeordneten Feder findet bei dieser Verschiebung des Sperrbolzens nicht statt.

Um die Vorrichtung möglichst platzsparend auszubilden, hat es sich als vorteilhaft erwiesen, wenn der Sperrbolzen keinen zentralen Ausschnitt aufweist, sondern auf seiner der Lenkspindel abgewandten Seite mit einem seitlich hervorstehenden Schenkel versehen ist, dessen der Lenkspindel zugewandte Fläche die Anlagefläche des Steuernockens bildet.

Als vorteilhaft hat es sich ferner erwiesen, wenn der z.B. aus Kunststoff bestehende Mitnehmer einen sich in Richtung der Längsachse des Sperrbolzens erstreckenden Körper aufweist, an dem auf gegenüberliegenden Seiten jeweils mindestens ein seitlich hervorstehender Arm angeordnet ist, wobei sich an dem ersten Arm der Steuernocken abstützt und der zweite Arm in eine erste Längsnut des Sperrbolzens eingreift, in welcher die Feder angeordnet ist, die sich einerseits an dem zweiten Arm des Mitnehmers und andererseits an dem der Lenkspindel zugewandten Ende der Längsnut abstützt.

Bei einer Ausführungsform der Erfindung ist der Körper des Mitnehmers innerhalb einer zweiten Längsnut des Sperrbolzens verschiebbar angeordnet, wobei diese Längsnut auf ihrer der Lenkspindel zugewandten Seite einen Anschlag aufweist, der die Verschiebung des Mitnehmers bei einer Hemmung des Sperrbolzens begrenzt, wenn Letzterer in seine Verriegelungsstellung verschoben wird.

Weitere Einzelheiten und Vorteile der Erfindung ergeben sich aus dem folgenden anhand von Figuren erläuterten Ausführungsbeispiel. Es zeigen:
Fig.1 den Längsschnitt durch eine an einer Lenksäule befestigte erfindungsgemäße Lenkspindel-Verriegelungsvorrichtung, wobei sich der Sperrbolzen in seiner Verriegelungsstellung befindet und
Fig.2 die Fig. 1 entsprechende Darstellung, wobei sich der Sperrbolzen in seiner Entriegelungsstellung befindet.

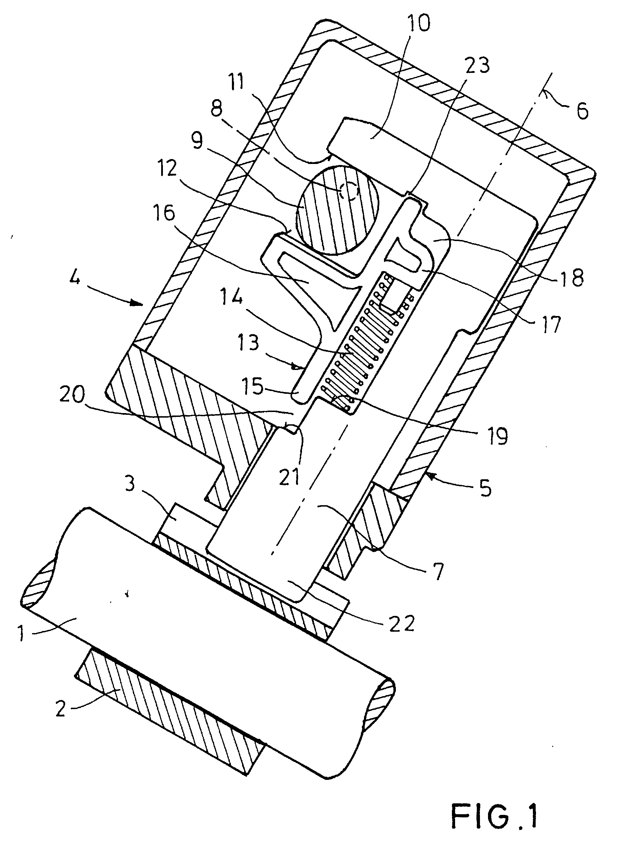

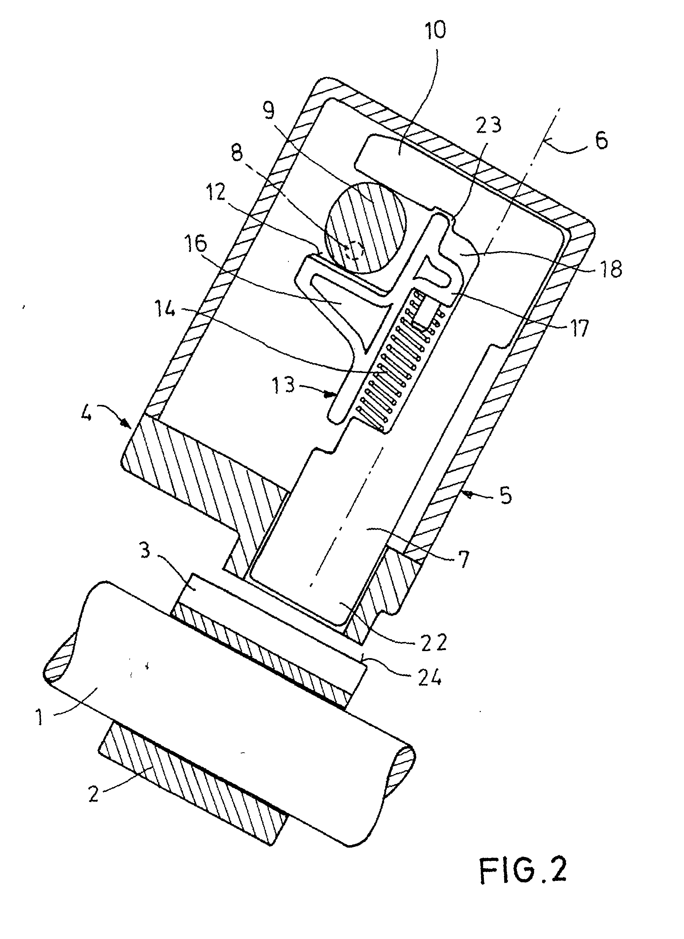

In den Fig. 1 und 2 ist mit 1 eine Lenkspindel eines Kraftfahrzeuges bezeichnet, auf der ein Schließring 2 mit Rastnuten 3 befestigt und eine erfindungsgemäße Vorrichtung 4 zur Verriegelung der Lenkspindel angeordnet ist.

Die Vorrichtung 4 umfaßt ein Gehäuse 5, in dem sowohl ein in Richtung seiner Längsachse 6 verschiebbarer, z.B. aus Stahl bestehender Sperrbolzen 7 als auch ein als Exzenter ausgebildeter und um eine Drehachse 8 drehbar gelagerter Steuernocken 9 angeordnet sind. Der Sperrbolzen 7 weist auf seinem der Lenkspindel 1 abgewandten Seite einen seitlich hervorstehenden Schenkel 10 auf, an dessen der Lenkspindel 1 zugewandte Fläche (Anlagefläche) 11 sich der Steuernocken 9 abstützt.

Auf seiner der Lenkspindel 1 zugewandten Seite stützt sich der Steuernocken 9 an der Anlagefläche 12 eines z.B. aus Kunststoff bestehenden Mitnehmers 13 ab, der in Richtung der Längsachse 6 des Sperrbolzens 7 verschiebbar in dem Gehäuse 5 gelagert und über eine relativ steife Feder 14 mit dem Sperrbolzen 7 verbunden ist. Hierzu besteht der Mitnehmer 13 aus einem sich in Richtung der Längsachse 6 des Sperrbolzens 7 erstreckenden Körper 15, an dem auf gegenüberliegenden Seiten jeweils ein seitlich hervorstehender Arm 16, 17 angeordnet ist. An dem ersten Arm 16 stützt sich der Steuernocken 9 ab. Der zweite Arm 17 greift in eine erste Längsnut 18 des Sperrbolzens 7 ein, in welcher die Feder 14 angeordnet ist. Letztere stützt sich mit ihrem ersten Ende an dem zweiten Arm 17 des Mitnehmers 13 und mit ihrem zweiten Ende an dem der Lenkspindel 1 zugewandten Ende 19 der ersten Längsnut 18 ab.

In dem Sperrbolzen 7 ist außerdem eine zweite Längsnut 20 vorgesehen, entlang welcher der Körper 15 des Mitnehmers 13 verschiebbar angeordnet ist, wobei die Längsnut 20 auf ihrer der Lenkspindel 1 zugewandten Seite einen Anschlag 21 aufweist, der die Verschiebung des Mitnehmers 13 bei einer Hemmung des Sperrbolzens 7 begrenzt, wenn dieser in seine Verriegelungsstellung verschoben wird.

Im folgenden wird auf die Wirkungsweise der erfindungsgemäßen Vorrichtung eingegangen. Dabei wird angenommen, daß sich die Vorrichtung 4 in der in Fig.1 dargestellten Verriegelungsstellung befindet. Soll die Vorrichtung 4 entriegelt werden, so wird z.B. durch Betätigung eines (nicht dargestellten) Schlüssels der den Steuernocken 9 drehende Elektromotor aktiviert. Der Steuernocken 9 dreht sich dann z.B. im Uhrzeigersinn um seine Drehachse 8. Dabei wird der Schenkel 10 des Sperrbolzens 7 nach oben gedrückt und sein unteres Ende 22 wird aus der Rastnut 3 gezogen. Der Sperrbolzen 7 nimmt dabei den durch die Feder 14 in eine Fixiemut 23 des Sperrbolzens 7 gedrückten Mitnehmer 13 mit.

Sobald der Sperrbolzen 7 seine Entriegelungsstellung erreicht hat (Fig.2), schaltet der Elektromotor ab, so daß sich der Steuernocken 9 nicht weiterdreht und ein nicht dargestellter Sicherungsbolzen fixiert den Sperrbolzen 7 an dem Gehäuse 5. Der Zündschlüssel kann dann zum Starten des Fahrzeuges in die Startposition gedreht werden.

Soll der Sperrbolzen von der Ent- wieder in die Verriegelungsstellung gebracht werden, wird z.B. durch Zurückdrehen des Zündschlüssels zunächst der (nicht dargestellte) Sicherungsbolzen zurückgezogen und anschließend der den Steuernocken 9 antreibende Elektromotor aktiviert. Bei der Drehung des Steuernockens 9 drückt dieser nun gegen die Anlagefläche 12 des Mitnehmers 13 und verschiebt dadurch sowohl den Mitnehmer 13 und über die relativ steife Feder 14 auch den Sperrbolzen 7. Dabei ist die Steifigkeit der Feder derart gewählt, daß es zu keinem nennenswerten Spannen der Feder kommt, wenn der Sperrbolzen 7 in eine Rastnut 3 des Schließringes 2 verschoben wird (Fig.1).

Sollte die Stellung des Schließringes 2 hingegen derart gewählt sein, daß der Sperrbolzen 7 auf den stegförmigen Bereich 24 (Fig.2) zwischen zwei benachbarten Rastnuten 3 trifft, so dreht sich der Steuernocken 9 weiter, bis er seine Endlage erreicht hat. Gleichzeitig wird der Mitnehmer 13 gegen den Druck der Feder 14 verschoben, bis der Körper 15 des Mitnehmers den Anschlag 21 erreicht hat. Dadurch wird die Feder 14 entsprechend vorgespannt.

Wird anschließend die Lenkspindel 1 durch Drehen des Lenkrades des entsprechenden Fahrzeuges verdreht, gleitet der Sperrbolzen 7 aufgrund der Vorspannung der Feder 14 schlagartig in eine der beiden benachbarten Rastnuten 3 und verriegelt damit die Lenkspindel 1.

### Bezugszeichenliste

- 1: Lenkspindel
- 2: Schließring
- 3: Rastnut
- 4: Vorrichtung
- 5: Gehäuse
- 6: Längsachse
- 7: Sperrbolzen
- 8: Drehachse
- 9: Steuernocken
- 10: Schenkel
- 11: Fläche, Anlagefläche (Sperrbolzen)
- 12: Anlagefläche (Mitnehmer)
- 13: Mitnehmer
- 14: Feder
- 15: Körper
- 16: erste Arm
- 17: zweite Arm
- 18: erste Längsnut
- 19: Ende (erste Längsnut)
- 20: zweite Längsnut
- 21: Anschlag
- 22: untere Ende (Sperrbolzen)
- 23: Fixiernut
- 24: stegförmiger Bereich

## Patentansprüche

1. Vorrichtung zur Verriegelung der Lenkspindel (1) einer Lenkeinrichtung eines Kraftfahrzeuges mit den Merkmalen:
a) die Vorrichtung (4) umfaßt sowohl einen in Richtung seiner Längsachse (6) von einer Ent- in eine Verriegelungsstellung und umgekehrt verschiebbaren Sperrbolzen (7) als auch einen als Exzenter ausgebildeten, drehbar angeordneten Steuernocken (9), der bei seiner Drehung die Verschiebung des Sperrbolzens (7) bewirkt;
b) der Steuernocken (9) stützt sich auf seiner der Lenkspindel (1) abgewandten Seite direkt an einer Anlagefläche (11) des Sperrbolzens (7) ab, derart, daß bei entsprechender Drehung des Steuernockens (9) der Sperrbolzen (7) von seiner Ver- in seine Entriegelungsstellung verschiebbar ist;
**gekennzeichnet durch** folgende Merkmale:
c) der Steuernocken (9) stützt sich auf seiner der Lenkspindel (1) zugewandten Seite an der Anlagefläche (12) eines Mitnehmers (13) ab, der in Richtung der Längsachse (6) des Sperrbolzens (7) verschiebbar und über eine Feder (14) mit dem Sperrbolzen (7) verbunden ist, derart, daß zur Verschiebung des Sperrbolzens (7) von seiner Ent- in seine Verriegelungsstellung **durch** entsprechende Drehung des Steuernockens (9) der Mitnehmer (13) und damit über die Feder (14) auch der Sperrbolzen (7) verschoben wird und daß bei einer Hemmung der axialen Verschiebung des Sperrbolzens (7) der Mitnehmer (13) gegen den Druck der Feder (14) bis in eine vorgegebene Endlage weiterverschoben wird, so daß der Sperrbolzen (7) nach Wegfall der Hemmung von der vorgespannten Feder (14) in seine Verriegelungsstellung gedrückt wird.

2. Vorrichtung nach Anspruch 1, **dadurch gekennzeichnet, daß** der Sperrbolzen (7) auf seiner der Lenkspindel (1) abgewandten Seite einen seitlich hervorstehenden Schenkel (10) aufweist, dessen der Lenkspindel (1) zugewandte Fläche (11) die Anlagefläche des Sperrbolzens (7) bildet.

3. Vorrichtung nach Anspruch 1 oder 2, **dadurch gekennzeichnet, daß** der Mitnehmer (13) einen sich in Richtung der Längsachse (6) des Sperrbolzens (7) erstreckenden Körper (15) aufweist, an dem auf gegenüberliegenden Seiten jeweils mindestens ein seitlich hervorstehender Arm (16,17) angeordnet ist, daß sich an dem ersten Arm (16) des Mitnehmers (13) der Steuernocken (9) abstützt, daß der zweite Arm (17) des Mitnehmers (13) in eine erste Längsnut (18) des Sperrbolzens (7) eingreift, in welcher die Feder (14) angeordnet ist, und daß das erste Ende der Feder (14) sich an dem zweiten Arm (17) des Mitnehmers (13) und das zweite Ende der Feder (14) sich an dem der Lenkspindel (1) zugewandten Ende der ersten Längsnut (18) abstützt.

4. Vorrichtung nach einem der Ansprüche 1 bis 3, **dadurch gekennzeichnet, daß** der Mitnehmer (13) aus Kunststoff besteht.

5. Vorrichtung nach Anspruch 3 oder 4, **dadurch gekennzeichnet, daß** der Körper (15) des Mitnehmers (13) innerhalb einer zweiten Längsnut (20) des Sperrbolzens (7) verschiebbar angeordnet ist, wobei diese Längsnut (20) auf ihrer der Lenkspindel (1) zugewandten Seite einen Anschlag (21) aufweist, der die Verschiebung des Mitnehmers (13) bei einer Hemmung des Sperrbolzens (7) begrenzt, wenn dieser in seine Verriegelungsstellung verschoben wird.

## Claims

1. A device for locking the steering shaft (1) of a steering mechanism of a motor vehicle, having the following features:
a) the device (4) comprises a locking pin (7) displaceable in the direction of its longitudinal axis (6) from an unlocking position into a locking position and vice versa as well as a rotatably disposed peripheral cam (9) constructed as an eccentric plate, which upon its rotation produces the displacement of the locking pin (7);
b) on its side further from the steering shaft (1) the peripheral cam (9) is supported directly on a bearing face (11) of the locking pin (7) in such a manner that upon a corresponding rotation of the peripheral cam (9) the locking pin (7) can move from its locking position into its unlocking position;
**characterised by the following features:**
c) on its side closer to the steering shaft (1) the peripheral cam (9) is supported on the bearing face (12) of a carrier (13), which is displaceable in the direction of the longitudinal axis (6) of the locking pin (7) and is connected via a spring (14) to the locking pin (7) in such a manner that, for the displacement of the locking pin (7) from its unlocking position into its locking position by corresponding rotation of the peripheral cam (9), the carrier (13) and thus, via the spring (14), also the locking pin (7) are displaced and upon the blocking of the axial displacement of the locking pin (7) the carrier (13) is further displaced against the pressure of the spring (14) into a predetermined end position, so that the locking pin (7) is forced into its locking position upon the elimination of the blocking of the pretensioned spring (14).

2. A device according to Claim 1,
**characterised in that** on its side further from the steering shaft (1) the locking pin comprises a laterally protruding leg (10), whose face (11) closer to the steering shaft (1) forms the bearing face of the locking pin (7).

3. A device according to Claim 1 or 2,
**characterised in that** the carrier (13) comprises a body (15) extending in the direction of the longitudinal axis (6) of the locking pin (7), on which at least one laterally protruding arm (16, 17) is disposed respectively on opposite sides,
**in that** the peripheral cam (9) is supported on the first arm (16) of the carrier (13),
**in that** the second arm (17) of the carrier (13) engages in a first longitudinal groove (18) of the locking pin (7), in which the spring (14) is disposed,
**and in that** the first end of the spring (14) is supported on the second arm (17) of the carrier (13) and the second end of the spring (14) is supported on the end of the first longitudinal groove (18) closer to the steering shaft (1).

4. A device according to one of Claims 1 to 3,
**characterised in that** the carrier (13) is made from plastic.

5. A device according to Claim 3 or 4,
**characterised in that** the body (15) of the carrier (13) is displaceably disposed inside a second longitudinal groove (20) of the locking pin (7), this longitudinal groove (20) having on its side closer to the steering shaft (1) a stop (21), which limits the displacement of the carrier (13) upon the blocking of the locking pin (7) if said locking pin is moved into its locking position.

## Revendications

1. Dispositif pour le verrouillage de la colonne de direction (1) d'un système de direction d'un véhicule automobile ayant les caractéristiques suivantes :
a) le dispositif (4) comprend non seulement un pêne de verrouillage (7) se déplaçant dans la direction de son axe longitudinal (6) d'une position de déverrouillage vers une position de verrouillage et vice-versa mais aussi une came de commande (9), réalisée sous la forme d'un excentrique et mobile en rotation, provoquant, lors de sa rotation, le déplacement du pêne de verrouillage,
b) la came de commande (9) prend directement appui, par sa face opposée à la colonne de direction 1, sur la surface d'appui (11) du pêne de verrouillage (7), de manière à permettre le déplacement du pêne de verrouillage (7) de sa position de verrouillage vers sa position de déverrouillage lors d'une rotation correspondante de la came de commande (9)
c) La came de commande (9) prend appui, par sa face tournée vers la colonne de direction (1), sur la surface d'appui (12) d'un élément d'entraînement (13) qui se déplace dans la direction de l'axe longitudinal (6) du pêne de verrouillage (7) et qui est relié au pêne de verrouillage (7) par l'intermédiaire d'un ressort (14) de manière telle que pour déplacer le pêne de verrouillage (7) de sa position de déverrouillage vers sa position de verrouillage par une rotation correspondante de la came de commande (9), on déplace non seulement l'élément d'entraînement (13) mais aussi, par l'intermédiaire du ressort (14), le pêne de verrouillage (7), et qu'en cas de blocage du déplacement axial du pêne de verrouillage (7), l'élément d'entraînement (13) continue de se déplacer à l'encontre de la pression exercée par le ressort (14) jusque dans une position de fin de course prédéfinie, de sorte que le pêne de verrouillage (7) soit poussé, après suppression du blocage, dans sa position de verrouillage sous l'action du ressort (14) précontraint.

2. Dispositif selon la revendication 1, **caractérisé en ce que** le pêne de verrouillage (7) comporte, sur sa face opposée à la colonne de direction (1), une branche (10) faisant saillie latéralement, dont la surface (11) tournée vers la colonne de direction (1) forme la surface d'appui du pêne de verrouillage (7).

3. Dispositif selon la revendication 1 ou 2, **caractérisé en ce que** l'élément d'entraînement (13) comporte un corps (15) s'étendant dans la direction de l'axe longitudinal (6) du pêne de verrouillage (7) et sur lequel est disposé, respectivement sur les faces opposées, au moins un bras (16, 17) faisant saillie latéralement, **en ce que** la came de commande (9) prend appui sur le premier bras (16) de l'élément d'entraînement (13), **en ce que** le deuxième bras (17) de l'élément d'entraînement (13) s'engage dans une première rainure longitudinale (18) du pêne de verrouillage (7) dans laquelle est disposé le ressort, **en ce que** la première extrémité du ressort (14) prend appui sur le deuxième bras (17) de l'élément d'entraînement (13) et **en ce que** la deuxième extrémité du ressort (14) prend appui sur l'extrémité tournée vers la colonne de direction (1) de la première rainure longitudinale (18).

4. Dispositif selon l'une quelconque des revendications 1 à 3, **caractérisé en ce que** l'élément d'entraînement (13) est en matière plastique.

5. Dispositif selon la revendication 3 ou 4, **caractérisé en ce que** le corps (15) de l'élément d'entraînement (13) se déplace dans une deuxième rainure longitudinale (20) du pêne de verrouillage (7), cette rainure longitudinale (20) comportant, sur sa face tournée vers la colonne de direction (1), une butée (21) limitant le déplacement de l'élément d'entraînement (13) en cas de blocage du pêne de verrouillage (7), lorsque celui-ci se déplace vers sa position de verrouillage.
